# EUROPEAN PATENT SPECIFICATION

(11) **EP 3 910 124 B1**
(45) Date of publication and mention of the grant of the patent: **04.03.2026**
(21) Application number: 20738391.0
(22) Date of filing: 10.01.2020
(51) Int. Cl.: E04B 1/343, E04B 1/76, E04B 1/80, E04C 2/26, E04C 2/292, E04C 2/36

(54) **HEAT-SHIELDING PANEL AND PREFABRICATED BUILDING**
WÄRMEABSCHIRMPANEEL UND VORGEFERTIGTES GEBÄUDE
PANNEAU DE PROTECTION THERMIQUE ET BÂTIMENT PRÉFABRIQUÉ

(30) Priority: 11.01.2019 JP 2019003453
(43) Date of publication of application: 17.11.2021
(73) Proprietor: Plants Laboratory, Inc., Minato-ku Tokyo 107-0062 (JP)
(72) Inventor: YUKAWA, Atsuyuki, Tokyo 107-0062 (JP); SHIMIZU, Shinji, Tokyo 107-0062 (JP)
(74) Representative: Uexküll & Stolberg
(86) International application number: PCT/JP2020/000721
(87) International publication number: WO 2020/145393

(56) References cited:
- CA-A1- 2 876 324
- JP-A- 2004 082 677
- JP-A- H0 820 086
- JP-A- H03 213 333
- JP-A- S 635 936
- JP-U- 3 024 108
- JP-U- 3 206 080
- JP-Y2- S6 111 383

## Description

### FIELD OF THE PRESENT DISCLOSURE

The present disclosure relates to a heat-shielding panel having a heat-shielding function, and a prefabricated building of which at least one of external walls, a roof and a floor is constructed by the heat-shielding panels.

### BACKGROUND OF THE PRESENT DISCLOSURE

In the prior art, a plant cultivation house for cultivating plants is provided. The plant cultivation house is provided with a room which is used for cultivating plants and constructed by covering a framework material with a plastic film, and the framework material is assembled by pillars, beams and the like. The plant cultivation house can keep plants cultivated indoors from wind and rain through the plastic film. However, the plastic film does not have a heat-isolating function that can isolate heat from entering the house in summer, or a heat-shielding function of reflecting radiation of sunlight.

A heat-shielding sheet having a heat-shielding function is described in Patent Document 1. The heat-shielding sheet is a single-side corrugated sheet body formed by adhering a flat sheet to a corrugated sheet. The flat sheet is a laminated body which is formed by adhering an aluminum film-evaporated lining board to a first substrate that is used as a flat paperboard. A plurality of grooves are formed in parallel in the corrugated sheet. The heat-shielding sheet is a structure in which an air layer is arranged in a groove enclosed by the flat sheet and the corrugated sheet. The heat-shielding sheet can reflect radiation of sunlight through the aluminum film-evaporated lining board.

### (The prior art document)

### (Patent document)

Patent Document 1: Japanese utility model registration publication No. 3178994

JP H08 20086 A discloses a heat-shielding panel, wherein a space enclosed by heat-shielding sheets is filled with a foamed phenolic resin.

### SUMMARY OF THE PRESENT DISCLOSURE

### (Problems to be solved by the present disclosure)

The heat-shielding sheet described in Patent Document 1 is provided with the air layer. Compared with glass and water, the stagnant air is not easy to conduct heat. In other words, the circulating air conducts heat. Because air circulates in the air layer of the heat-shielding sheet described in Patent Document 1, the heat-isolating function is difficult to realize.

In view of this situation, the present disclosure is proposed, and is directed to provide a heat-shielding panel having a heat-shielding function and a heat-isolating function, and a prefabricated building of which at least one of external walls, a roof and a floor is constructed by the heat-shielding panels

### (Measures taken to solve the problems)

To solve the above problems, a heat-shielding panel according to independent claim 1 is provided, wherein the heat-shielding panel of the present invention includes:
a pair of sheets, the pair of sheets being provided with an exposed front face respectively, and back faces of the pair of sheets being oppositely arranged at intervals; and
a spacer, the spacer being arranged between the pair of sheets,
each of the pair of sheets being a heat-shielding sheet,
the spacer including an enclosed space, and
a fluid being enclosed in the enclosed space in a manner that the fluid does not circulate in the enclosed space;
wherein the fluid enclosed in the enclosed space is air.

In the heat-shielding panel of the present disclosure, preferably, the length of at least one side of the pair of sheets is about 900 mm or above.

Preferably, the thickness of the spacer of the present disclosure is about 4 mm to about 100 mm.

Further preferably, the thickness of the spacer of the present disclosure is about 10 mm to about 100 mm.

In the heat-shielding panel of the present disclosure, preferably, the sheets are adhered to the spacer through an adhesive.

In the heat-shielding panel of the present disclosure, preferably, the heat-shielding sheet includes an shielding layer and a metal layer.

In the heat-shielding panel of the present disclosure, preferably, lines are formed on the sheets under the pressing of end edges of the spacer.

In the heat-shielding panel of the present disclosure, preferably, the spacer is of a cellular structure.

In the heat-shielding panel of the present disclosure, preferably, the heat-shielding sheet includes an aluminum layer.

To solve the problems, the prefabricated building of the present disclosure includes: external walls, a roof, and a floor, at least one of the external walls, the roof and the floor being constructed by the heat-shielding panels of the present invention.

The prefabricated building of the present disclosure is preferably equipped with an air-conditioner.

### (Effects of the present disclosure)

According to the present disclosure, a heat-shielding panel having a heat-shielding function and a heat-isolating function, and a prefabricated building of which at least one of external walls, a roof and a floor is constructed by the heat-shielding panels are provided.

### BRIEF DESCRIPTION OF THE DRAWINGS

Fig. 1 is a stereogram of a heat-shielding panel according to a first embodiment of the present disclosure;
Fig. 2 is an exploded stereogram of the heat-shielding panel according to the first embodiment of the present disclosure;
Fig. 3 is an enlarged section view of a heat-shielding sheet of the heat-shielding panel according to the first embodiment of the present disclosure;
Fig. 4 is a stereoscopic diagram of a prefabricated building according to the first embodiment of the present disclosure;
Fig. 5 is a stereogram of a heat-shielding panel according to a second embodiment of the present disclosure not forming part of the claimed invention;
Fig. 6 is an exploded stereogram of the heat-shielding panel according to the second embodiment of the present disclosure not forming part of the claimed invention;
Fig. 7 is an enlarged section view of an important part of the heat-shielding panel according to the second embodiment of the present disclosure not forming part of the claimed invention;
Fig. 8 is a stereogram of a reference example of the heat-shielding panel of the present disclosure not forming part of the claimed invention;
Fig. 9 is a diagram of temperature measurement sites in an experiment of the heat-shielding panel of the present disclosure; and
Fig. 10 is a diagram of temperature measurement results in the experiment of the heat-shielding panel of the present disclosure.

### DESCRIPTION OF THE EMBODIMENTS

The present disclosure will be described below. It should be understood that terms used in the present description has the meanings commonly used in the art unless specifically stated otherwise.

The term "about" used in the present disclosure refers to a range of ±10% of the following numerical value.

### (First embodiment)

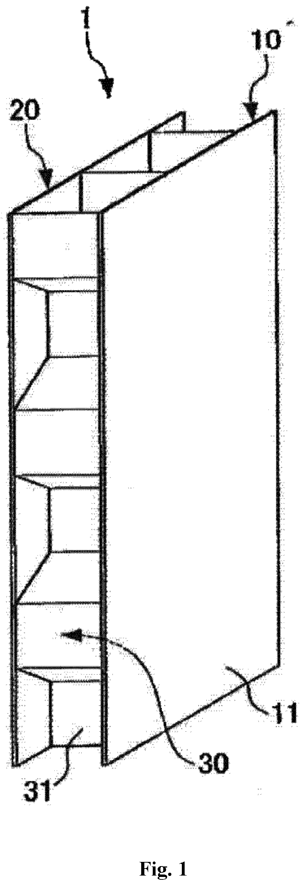

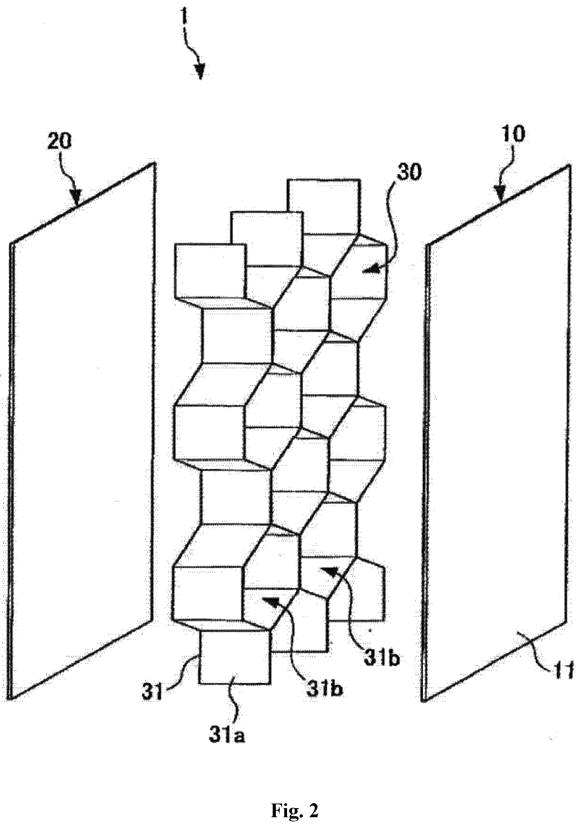

A first embodiment of a heat-shielding panel and a prefabricated building of the present disclosure will be described with reference to Fig. 1 to Fig. 4. As shown in Fig. 1 and Fig. 2, the heat-shielding panel includes a pair of sheets 10 and 20 which are oppositely arranged at intervals, and a spacer arranged between the sheets 10 and 20, wherein an enclosed space 30 in which a fluid is enclosed is formed by the spacer 31. In a preferable embodiment, the heat-shielding panel 1 of the present disclosure is of a three-layer structure composed of the pair of sheets 10 and 20 and the spacer 31, and does not include a sheet for further dividing the spacer 31. The heat-shielding panel of the present disclosure is characterized in that a good heat-shielding effect can be achieved by using this sample structure.

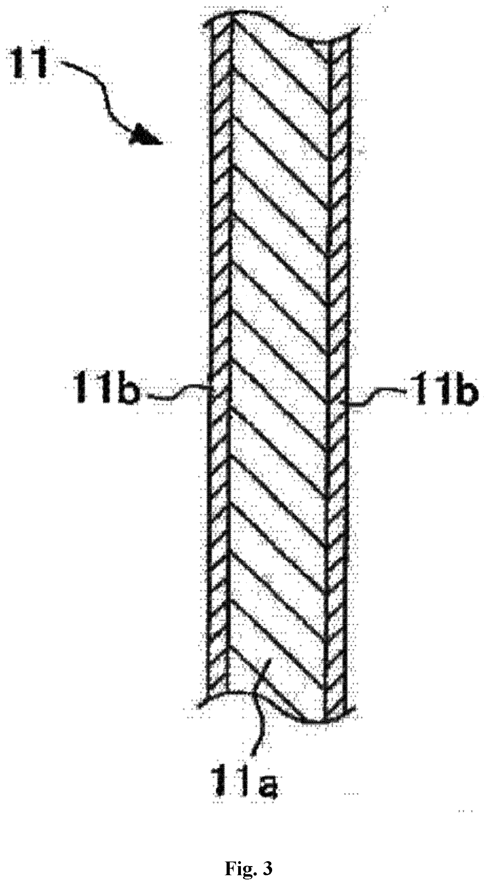

The sheet 10 is formed by a heat-shielding sheet 11 which can reflect radiation of sunlight. In an embodiment, as shown in Fig. 3, the heat-shielding sheet is a laminated body including a sheet material 11a and metal layers 11b and 11b on both faces of the sheet material 11a. The metal layers 11b and 11b are metal foil layers formed by means of evaporation, spattering or coating, or metal board (thin film, etc.) layers fixed through an adhesive, etc. The sheet material 11a is preferably a paperboard, and thus the heat-shielding panel 1 is light, and its manufacturing cost is low. However, the sheet material 11a may also be a glass fiber cloth, a cloth-like material, etc. In Fig. 3, an embodiment in which the metal layers 11b are arranged at both ends of the sheet material 11a is illustrated, but the present disclosure is not limited thereto. An embodiment in which the metal layer 11b is arranged at one side (a side is not adhered to the spacer) of the sheet material 11a, and the metal layer 11b is not arranged at a side adhered to the spacer is also in the scope of the present disclosure. To adhere the spacer to the sheet 10 (or 20), in the case where the sheet material is more preferable than the metal layer, especially preferably, the metal layer 11b is arranged at one side (the side is not adhered to the spacer) of the sheet material 11a. In an embodiment, the metal layer 11b is an aluminum layer (aluminum board, aluminum foil, etc.). Compared with other metal materials, the aluminum layer has an excellent heat-shielding function. However, the present disclosure is not limited thereto. For example, the metal layer 11b may also be a steel foil, etc. A surface of the metal layer 11b has water resistance, waterproofness, rust resistance, or the like by evaporating, spattering, or coating an anti-electrocorrosion agent (for example, an shielding layer 12a described later), or attaching a film containing an electrocorrosion agent, or the like.

The other sheet 20 is made of an Acryl board, a reinforced plastic board, a paperboard, a cloth, an iron board, or composites thereof. The other sheet 20 may also be formed by the heat-shielding sheet 11. In a preferable embodiment, the sheet 10 and the sheet 20 may be of the same structure.

The spacer 31 is sandwiched between the pair of sheets 10 and 20. The enclosed space 30 is formed by the pair of sheets 10 and 20 and the spacer 31. In a preferable embodiment, as shown in Fig. 2, the spacer 31 is made of a core material 31a and is of a cellular structure formed by adjacently arranging a plurality of cells 31b which are hexagonal in a front view. Through the cellular structure, the heat-shielding panel which is provided with the enclosed space 30 between the pair of sheets 10 and 20 is light, and has high compressive strength in a thickness direction. The spacer 31 may be made of a material with low thermal conductivity, for example, plastics such as polystyrene, polyurethane, Acryl and the like, or paper, wood, cork, and the like. The spacer 31 is preferably made of a flame-retardant material.

Similar to a corrugated paper manufactured by adhering a coiled material to a core material, the heat-shielding panel is preferably manufactured by adhering two edges (edges adjoining the sheets 10 and 20, respectively) of the core material (spacer) 31a to each of the sheets 10 and 20 through an adhesive. The adhesive may be a double faced adhesive tape or an adhesive object as long as it can tightly adhere the spacer to each of the sheets 10 and 20. The sheets 10 and 20 and the spacer 31 are preferably made of papers, further preferably, are made of flame-retardant papers. By using the papers as materials, the heat-shielding panel is light, and the manufacturing cost is low.

The heat-shielding panel 1 can be in any shape. To facilitate manufacturing and construction operation, the heat-shielding panel 1 is preferably roughly rectangular (rectangular or square), but the present disclosure is not limited thereto. For example, the heat-shielding panel 1 may also be roughly trapezoidal, roughly rhomboidal, or in other tetragonal shapes other than the rough rectangle.

The thickness of the heat-shielding panel (the pair of sheets 10 and 20) is not limited and is determined according to the size of a construction site for arranging the heat-shielding panels, required heat-isolating performance, etc. For example, the thickness of the heat-shielding panel may be about 4 mm to about 100 mm or about 10 mm to about 100 mm. Preferably, the thickness of the heat-shielding panel is about 4 mm to about 50 mm, more preferably, is about 4 mm to about 40 mm, further preferably, is about 4 mm to about 30 mm or about 4 mm to about 20 mm, and particularly preferably, is about 10 mm to about 15 mm. In an embodiment, the thickness of the heat-shielding panel is about 15 mm (the thickness of the three-layer structure which includes the spacer having a thickness of 14 mm).

In addition, the size (e.g. the length of at least one side of the heat-shielding panel) of the heat-shielding panel (the pair of sheets 10 and 20) is not limited and is determined according to the size and the shape of a construction site for arranging the heat-shielding panels. In an embodiment, the length of one side of the heat-shielding panel (the pair of sheets 10 and 20) is about 900 mm or above. Preferably, the length of one side in a short side direction is about 900 mm or above. In the case where the length of one side is about 900 mm or above, particularly preferably, the heat-shielding panel 1 (the pair of sheets 10 and 20) is formed by the heat-shielding sheets 11 having the metal layers.

In this way, by forming both of the pair of sheets 10 and 20 with the heat-shielding sheets 11 having the same metal layer, deformations of the pair of sheets 10 and 20, which are caused by the change of temperature and humidity during manufacturing and construction of the heat-shielding panel 1, can be the same. As a result, the bending and warping of the sheet 10 and the sheet 20 which are made of different materials are counteracted, so that the bending and warping of the heat-shielding panel 1 can be suppressed. It is preferable in the case where the length of one side of the heat-shielding panel 1 is longer than a specified length. More preferably, to suppress the bending and warping, the sheet 10 and the sheet 20 may be composed of the same structure such as the same sheet material, the same metal layer, the same shielding layer and the like.

Therefore, by forming both of the pair of sheets 10 and 20 with the heat-shielding sheets 11 having the metal layers, the bending and warping can also be suppressed even if the thickness of the heat-shielding panel 1 is small, and the size (length) is large, and the heat-shielding panel used as an structural material of building materials of the external walls, the roof and the floor of the prefabricated building 5 to be described later may not damage the working performance of the construction when being fixed to the framework material, and maintain the working performance. The size of the heat-shielding panel may be in a range of the length in the short side direction being about 900 mm×the length in the long side direction being about 900 mm to the length in the short side direction being about 1,300 mm×the length in the long side direction being about 3,000 mm. In an embodiment, the length in the short side direction is about 1,000 mm to 1,100 mm and the length in the long side direction is about 2,500 mm to about 2,700 mm. Further, in an embodiment, with respect to the size of the heat-shielding panel 1, a ratio of the length in the short direction to the length in the long direction is 1: (about 1 to about 3). By setting the relationship between the length in the short side direction of the heat-shielding panel 1 and the length in the long side direction to be within the above range, even if the thickness of the heat-shielding panel is smaller, and the size (length) of the heat-shielding panel is large, the anti-bending and anti-warping effect can also be improved.

In either case, the fluid is enclosed in each cell 31b of the spacer 31, i.e. the enclosed space 30. The fluid is air. In a preferable embodiment, air with low thermal conductivity is used. Air has an advantage of being easily enclosed in the enclosed space 30 even if not in a special room. The air enclosed in the enclosed space 30 does not circulate. The air in the enclosed 30 performs a heat-isolating function. Because air is non-toxic, even if the air leaks slightly from the enclosed space 30, it does not adversely affect the surrounding environment.

The thickness of the spacer 31 is not limited and is determined according to the size of a construction site for arranging the heat-shielding panels, the required heat-isolating performance, etc. Preferably, the thickness of the spacer 31 is about 4 mm to about 100 mm, or about 10 mm to about 100 mm. Preferably, the thickness of the spacer 31 is about 4 mm to about 50 mm, more preferably, is about 4 mm to about 40 mm, further preferably, is about 4 mm to about 30 mm or about 4 mm to about 20 mm, and particularly preferably, is about 10 mm to about 15 mm. If the thickness of the spacer 31 is less than about 4 mm, the amount of the air enclosed in the enclosed space 30 is small, and thus a good heat-isolating function cannot be realized. Based on this point of view, preferably, the thickness of the spacer 31 is about 4 mm or above, and preferably is about 10 mm or above. By setting the thickness of the spacer to be within these ranges, the good heat-isolating function can be realized, and meanwhile, the heat-shielding panel 1 with sufficient strength is light, and the manufacturing cost is low. In addition, in the present description, "the thickness of the spacer 31" refers to the size of an interval between the pair of sheets 10 and 20. Although it is not to be bound by theory, if the thickness of the spacer (in addition, it should be noted that a case where the sheet has almost no thickness exists, and in this case it can be considered that the thickness of the spacer is almost equal to the thickness of the panel) is about 50 mm or above, and more preferably, is about 100 mm or above, the bending and warping of the panel hardly occur. However, the inventor set the first sheet and the second sheet to be of the same structure (e.g. each sheet includes a paperboard, a metal layer, and a coating layer, and more preferably, the sheets are adhered to the spacer, so that lines are formed on the sheets under the pressing of end edges of the spacer), and thus, even if the thickness of the spacer is, for example, about 4 mm to about 100 mm, and more typically, is about 4 mm to about 50 mm, the panel of the present disclosure is not bent and warped. The panel of the present disclosure may be a flat panel.

In the panel 1 shown in Fig. 1 and Fig. 2, peripheries of the spacer 31 are exposed. The panel 1 can be used either in this state or in the case where the peripheries of the spacer 31 are covered by a cover (not shown). The spacer 31 may be a strip-shaped object sandwiched between peripheries of the pair of sheets 10 and 20, or formed by bending a peripheral part of any one of the sheets 10 and 20 or formed by bending the peripheral parts of both of the sheets 10 and 20.

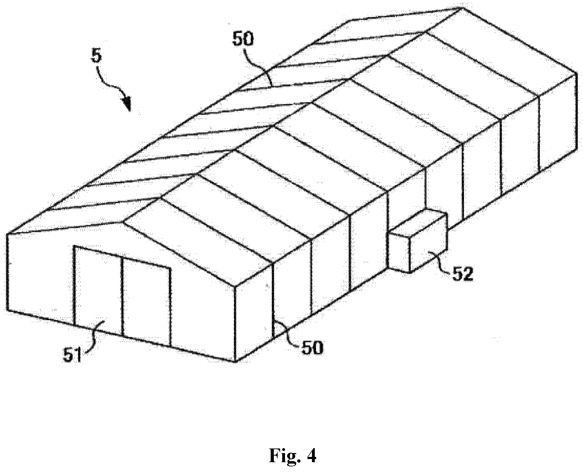

As shown in Fig. 4, the heat-shielding panel 1 is used as a structural material of building materials of the external walls, the roof and the floor of the prefabricated building 5. For example, the prefabricated building 5 is constructed by arranging a framework material 50 such as pipes and squares on the ground, and mounting and fixing the heat-shielding panels 1 on the framework material 50 piece by piece to allow the plurality of heat-isolating panels 1 to be arranged adjacent to each other.

Optionally, end faces of the plurality of heat-shielding panels 1 are in butt joint to form (flat filling) heat-shielding units, and then end edges or a middle part of the heat-shielding unit is fixed to the framework material 50 to construct the external walls, the roof, the floor, etc. of the prefabricated building 5. Optionally, the prefabricated building 5 may be constructed by covering the framework material 50 arranged on the ground with sheets (not shown), and fixing the heat-shielding panel 1 or heat-shielding unit to a front face or back face of the sheet.

In either case, to reflect radiation of sunlight, in the heat-shielding panel 1 used as an external wall or roof, the heat-shielding sheet 11 is made to face outward and the other sheet 20 is made to face inward. To reflect radiation from the ground, in the heat-shielding unit used as a floor, the heat-shielding sheet 11 is made to face the ground and the other sheet 20 is made to face the room. An iron board or floor mat is laid on the other sheet 20 of the heat-shielding panel 1 which is used as the floor.

The prefabricated building 5 assembled in this manner can be used in various fields. For example, in the field of agriculture, the prefabricated building 5 can be used as a storage warehouse for harvested crops. The storage warehouse has an enough size that can store a lot of crops.

For example, one or more rows of shelves (not shown) formed by erecting shelf boards on a pair of side boards are arranged in the storage warehouse. A section of or a plurality of sections of shelf boards are arranged on the pair of side boards according to the amount of the crops. If the iron board is laid on the heat-shielding panel 1 which is used as the floor, the iron board bears loads of the shelves and the crops, so that the heat-shielding panel 1 can be prevented from being broken.

An entrance 51 is arranged on a part of the prefabricated building 5 which is used as the storage warehouse. An air-conditioner 52 is arranged in the prefabricated building 5 as required. The air-conditioner 52 may be an integrated type integrating a compressor, a condenser and an evaporator, or a split type composed of an outdoor unit and an indoor unit. The integrated air-conditioner 52 may also be arranged on an outer side of the prefabricated building 5 to introduce cool air into the room through pipes (not shown).

By using the heat-shielding panel 1, that is, by using the heat-shielding sheet 11, the enclosed space 30 and the spacer 31, the interior of the storage warehouse is not affected by outside air, etc., and further the air-conditioner 52 is used to cool down the interior of the storage warehouse. Therefore, even if the storage warehouse has a size requiring a commercial air-conditioner 52, but a household air-conditioner 52 can also be used for cooling. The crops can be stored in the storage warehouse in the best state, and are delivered appropriately

If all the crops are delivered, the shelves can be removed from the storage warehouse, and the heat-isolating panels 1 can be dismounted from the framework material 50, and the framework material 50 can be removed. Because the heat-shielding panel 1 is used as the structural material of the building material, the prefabricated building 5 can be easily disassembled. Further, in the future, the heat-shielding panel 1 can be reused as the structural material of the building material of the prefabricated building 5 which is required to be arranged.

### (Second embodiment, not forming part of the claimed invention)

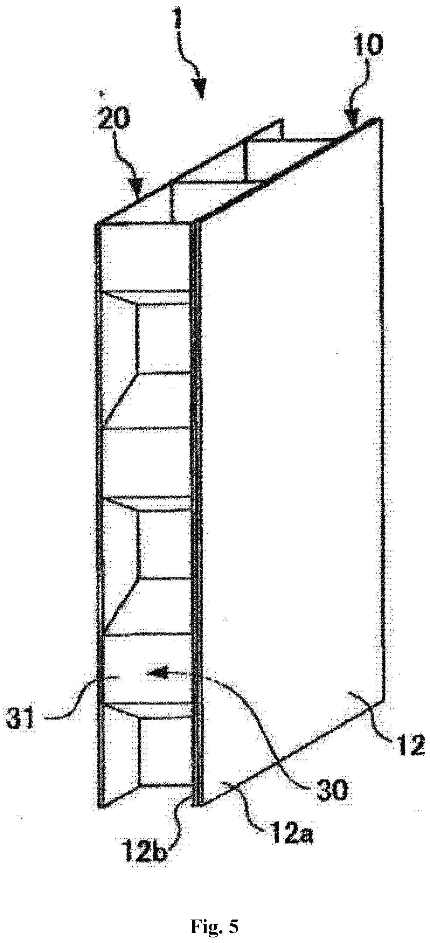

A second embodiment of the heat-shielding panel of the present disclosure will be described with reference to Fig. 5 to Fig. 7. In the second embodiment, the same parts and equivalent parts as those of the first embodiment are denoted by the same reference signs, and the description will be made accordingly.

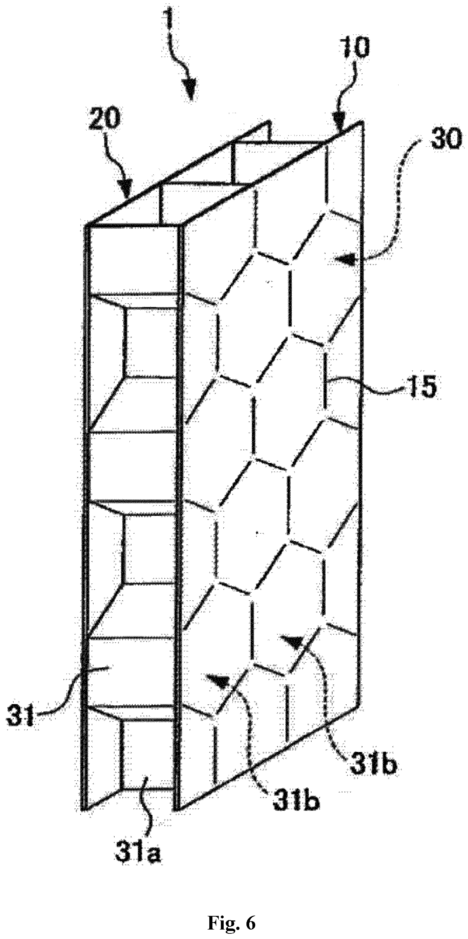

As shown in Fig. 5 and Fig. 6, a heat-shielding panel 1 according to the second embodiment includes a pair of sheets 10 and 20, and an enclosed space 30. Each of the pair of sheet 10 and 20 has an exposed front face, and their back faces are oppositely arranged at intervals. The enclosed space 30 is arranged in a region enclosed by the pair of sheets 10 and 20 and a spacer 31 sandwiched between the pair of sheets 10 and 20.

At least one of the pair of sheets 10 and 20 is formed by a heat-shielding sheet 12 that can reflect radiation of sunlight. The heat-shielding sheet 12 is a metal layer having a surface which is provided with an shielding layer 12a. That is, the heat-shielding sheet 12 is a metal layer manufactured by covering a metal substrate 12b such as aluminum with the shielding layer 12a which is formed by coating or fixing through an adhesive a thermoplastic resin (such as, polyethylene terephthalate (PET), polybutylene terephthalate (PBT), polyamide (PA), polypropylene (PP), and polyethylene (PE)), etc. to a surface of the metal substrate 12b. Optionally, the heat-shielding sheet 12 may also be a metal layer manufactured by oxidizing the surface of the metal substrate 12b and covering the surface with the isolating layer 12a. In either case, under the action of the shielding layer 12a, the metal substrate 12b of the heat-shielding sheet 12 can be protected from electrocorrosion. In the case where the pair of the sheets 10 and 20 are the heat-shielding sheets 12, the shielding layers 12a of the heat-shielding sheets 12 used to form the sheets 10 and 20 may be made of the same material, or different materials. From the viewpoint of suppressing the deformation, preferably, the shielding layers 12a of the heat-shielding sheets 12 used to form the sheets 10 and 20 are made of the same material.

In addition, in the case where the heat-shielding sheets 12 are used to construct the prefabricated building 5 shown in Fig. 4, surfaces of the prefabricated building 5 are covered with the shielding layers 12a. Therefore, short circuit accidents on the surfaces of the prefabricated building 5 can be prevented.

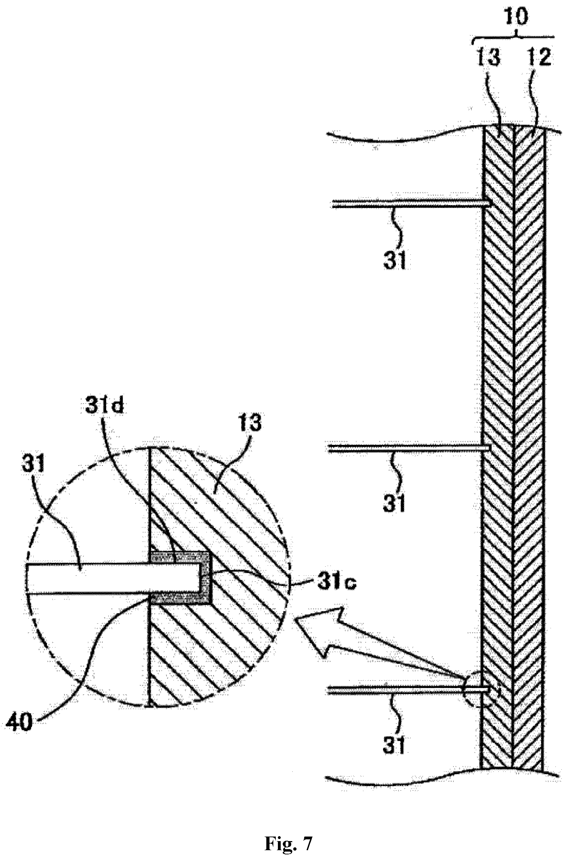

As shown in Fig. 7, a back face of the heat-shielding sheet 12 may also be laminated with a buffer material layer 13. The buffer material layer 13 may be made of a non-woven cloth or urethane. A back face (a face opposite to the other sheet 20) of the buffer material layer 13 is coated with a tacky adhesive 40 for adhering the spacer 31 in a gapless and air-tight manner.

The adhesive 40 may be only coated to a part, adhered to the spacer 31, of the buffer material layer 13, or coated to the whole back face of the buffer material layer 13 by means of soaking. Optionally, the adhesive 40 may also be coated to end edges (edges for pressing the buffer material layer 13) of the spacer 31 to adhere the end edges of the spacer 31 to the back face of the heat-shielding sheet 12 without the buffer material layer 13. Optionally, the adhesive 40 may also be an adhesive for adhering a sheet-like adhesive object to the back face of the buffer material layer 13 or the end edges of the spacer.

In either case, although not shown, ends 31 of a front face and a back face, continuous to the end edges of the spacer 31, of the spacer 31 are covered by the adhesive 40. That is, the adhesive 40 swells at the ends 31d of the spacer 31 to adhere the ends 31d of the spacer 31 to the back face of the buffer material layer 13, and further adhere the end edges 31c of the spacer 31 to the back face of the buffer material layer 13. Optionally, shown as the enlarged part in Fig. 7, the ends 31d of the spacer 31 sink into the buffer material layer 13, and the ends 31d of the spacer 31 and the buffer material layer 13 are adhered by the adhesive 40.

The spacer 31 is of a cellular structure formed by arranging a plurality of hexagonal cells 31b (see Fig. 2) adjacently. The spacer 31 used as a core material (a cellular core) is sandwiched between the pair of sheets 10 and 20. Although not shown, the pair of sheets 10 and 20 are formed by cutting a coil rolled by a roller. The spacer 31 is pressed between the coils of the pair of sheets 10 and 20. To tightly adhere a coil of the spacer 31 to the coils of the pair of sheets 10 and 20 together, a strong force is needed during pressing.

As a result, as shown in Fig. 6, lines are formed on the front faces of the pair of sheets 10 and 20 (only the heat-shielding sheet 12 is shown in Fig. 6) under the pressing of the end edges of the spacer 31. The lines 15 are not sharp ridge lines, but swell like a ridge. In other words, the sheets 10 and/or 20 can have such a thickness that: by adhering to the spacer 31, the lines 15 are formed under the pressing of the end edges of the spacer 31. In addition, the coils of the pair of sheets 10 and 20 which are rolled by a roller and the coil of the spacer 31 are cut according to a specific length.

In the heat-shielding panel 1, the enclosed space 30 is arranged in the cell 31b enclosed by the pair of sheets 10 and 20 and the spacer 31. A fluid is enclosed in the enclosed space 30. The fluid may be air with low thermal conductivity. Because the back face of the buffer material layer 13 is adhered to the ends 31d of the spacer 31 through the adhesive 40 in an air-tight manner, the fluid does not circulate in the enclosed space 30. Therefore, the heat-shielding panel 1 performs the heat-isolating function.

In addition, at least the sheet 10 is formed by the heat-shielding sheet 12, so that the heat-shielding panel 1 performs the heat-shielding function. As described in the first embodiment, the heat-shielding panel 1 of the second embodiment is used as a structural material of building materials of the external walls, the roof and the floor of the prefabricated building (see Fig. 4).

Here, a modification example of the second embodiment, which is not shown, will be described. The sheet 10 is formed by laminating the buffer material layer 13 to the back face of the heat-shielding sheet 12. However, the sheet 10 may also be formed by laminating a sheet which is the same as the sheet 20 to the back face of the heat-shielding sheet 12, instead of laminating the buffer material layer 13. That is, the sheet 10 may be a laminated body formed by laminating a sheet made of any one of an Acryl board, a reinforced plastic board, a paperboard, a cloth, an iron board, a corrugated paper, or their composites to the heat-shielding sheet 11. In this case, in the heat-shielding sheet 12, a back face of the sheet such as an Acryl board or corrugated paper is coated with the adhesive 40. Further, in the heat-shielding panel 1, the back face of the heat-shielding sheet 12 may not be laminated with the buffer material layer 13, but is adhered to the spacer 31.

Further, the back face of the heat-shielding sheet 12 may not be laminated with the buffer material layer 13 or the sheet such as an Acryl board or corrugated paper. In this case, the back face of the heat-shielding sheet 12 is directly adhered to the spacer 31 through the adhesive. The adhesive needs to cover the ends 31d of the spacer 31.

The heat-shielding sheet 12 is a metal layer formed by covering the metal substrate 12b with the shielding layer 12a. However, the metal substrate 12b may be the laminated body shown in Fig. 3, i.e. the laminated body formed by coating or adhering through an adhesive the metal layers b and 11b to both faces of the sheet material 11a. A back face of the heat-shielding sheet 12 can be laminated with the buffer material layer 13, or is laminated with an Acryl board, a corrugated paper, etc. Optionally, in the heat-shielding panel 1, the heat-shielding sheet 12 which is the same as the laminated body shown in Fig. 3 may also be directly adhered to the spacer 31.

Further, the heat-shielding sheet 12 is a sheet formed by providing the shielding layer 12a on the surface of the metal substrate 12b. However, the heat-shielding sheet 12 may also be formed by the metal substrate 12b without the shielding layer 12a. Further, in the heat-shielding panel 1, the pair of sheets may also be formed by the heat-shielding sheets 12 and 12.

### (Other embodiments)

The spacer 31 of the heat-shielding panel 1 is not limited to the cellular structure, may also be formed by arranging adjacently a plurality of cells 31b which are triangular, quadrangular, or round in a front view, may be in a grid shape like a barrier, or may be of a frame-like hollow structure formed by surrounding the peripheries of the pair of sheets 10 and 20.

The prefabricated building 5 may also be a temporary shop, a temporary rest place, a temporary dwelling, etc. other than the storage warehouse for crops. The temporary shop or temporary rest place has a roof, three external walls including two side faces and a back face, and an opening front face. In the temporary shop or temporary rest place, the heat-shielding panels 1 are used to construct the roof and the external walls of three sides, and whether to be used to construct the floor is optional. For the temporary dwelling, not only an entrance 51, but also windows may be constructed by the heat-shielding panels as required. If the temporary shop, temporary rest place or temporary dwelling is no longer needed, they can be disassembled.

In the prefabricated building 5, although the external walls, the roof and the floor are all constructed by the heat-shielding panels 1, it is possible that only the external walls and the roof are constructed by the heat-shielding panels 1.

Although the prefabricated building 5 is temporary, it may be constructed into a permanent building. For example, the heat-shielding panels 1 may also be used to construct external walls, a roof, etc. of a cultivation house for covering fruits and gardening, a livestock house such as a chicken house or a cow house, or a building on the land for a fish pond for culturing fishes. Further, the heat-shielding panels 1 may also be used to construct a stove box of a Japanese foot stove (which is called horigotatsu in Japanese).

### (Reference Example)

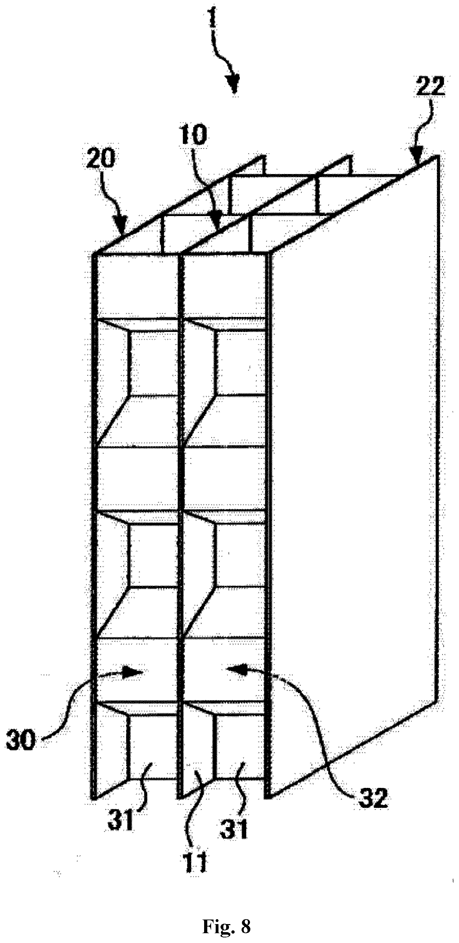

A reference example of the heat-shielding panel of the present disclosure will be described with reference to Fig. 8. Fig. 8 is a stereogram of the reference example of the heat-shielding panel of the present disclosure. A heat-shielding panel 1 according to the reference example may include: an additional sheet 22 which is arranged opposite to the heat-shielding sheet 11 used as the sheet 10 at intervals; and an additional enclosed space 32 which is arranged between the additional sheet 22 and the heat-shielding sheet 11, wherein a fluid such as air is enclosed in the additional enclosed space 32. A spacer 31 of a cellular structure is sandwiched between the heat-shielding sheet 11 and the additional sheet 22. By arranging the enclosed space 30 and the additional enclosed space 32 in which the fluids such as air are enclosed on both faces of the heat-shielding sheet 11, the heat-shielding function of the heat-shielding panel 1 can be further enhanced.

### (Conclusion)

In conclusion, the applicable heat-shielding panel 1 of the present invention is defined by independent claim 1 and includes:
a pair of sheets 10 and 20, the pair of sheets 10 and 20 being provided with an exposed front face respectively, and back faces of the pair of sheets 10 and 20 being oppositely arranged at intervals; and
a spacer 31, the spacer 31 being arranged between the pair of sheets 10 and 20, the pair of sheets 10 and 20 being the heat-shielding sheets 11 and 12, respectively,
the spacer 31 including an enclosed space 30, and
a fluid being enclosed in the enclosed space 30 in a manner that the fluid does not circulate in the enclosed space;wherein the fluid enclosed in the enclosed space is air.

The sheet 10 and the sheet 20 are formed by the heat-shielding sheets 11 and 12, and thus the heat-shielding panel 1 can perform the heat-shielding function of reflecting radiation of sunlight, etc.; a fluid is enclosed in the enclosed space, and thus the heat-shielding panel 1 can perform the heat-isolating function of isolating heat, and meanwhile, the bending and warping of the heat-shielding panel can be suppressed.

In the heat-shielding panel 1 of the present disclosure, the sheets 10 and 20 are adhered to the spacer 31 through the adhesive 40. As a result, the adhesive 40 covers the ends 31d of the spacer 31. According to the heat-shielding panel 1, because the sheets 10 and 20 are adhered to the spacer 31 (ends 31d) through the adhesive 40, the sheets 10 and 20 are adhered to the spacer 31 in a gapless and air-tight manner, and moreover, the fluid in the enclosed space 30 does not circulate, thereby enhancing the heat-isolating function.

In the applicable heat-shielding panel 1 of the present disclosure, the lines 15 are formed on the sheets 10 and 20 under the pressing of the end edges of the spacer 31. The lines 15 are formed on the sheets 10 and 20 under the pressing of the end edges of the spacer 31, thereby enhancing an adhesive force between the sheets 10 and 20 and the spacer 31.

In the applicable heat-shielding panel 1, the spacer 31 may also be of a cellular structure. According to the heat-shielding panel 1, due to the cellular structure, the heat-shielding panel 1 is light, and the compressive strength in a thickness direction is enhanced. In addition, the pair of sheets 10 and 20 are formed by the heat-shielding sheets 11 and thus the bending and warping of the heat-shielding panel can be prevented.

In the applicable heat-shielding panel 1 of the present disclosure, the fluid enclosed in the enclosed space 30 is air. According the heat-shielding panel 1, air with low thermal conductivity is used to form a heat-isolating layer, so that the heat-isolating function can be enhanced. In addition, air does not increase the cost and is safe, so that the heat-shielding panel is processed easily.

The applicable prefabricated building 5 of the present disclosure includes: external walls, a roof, and a floor, wherein at least one part of the external walls, the roof and the floor is constructed by the heat-shielding panels 1 of the present invention.

According to the prefabricated building 5, because at least one of the external walls, the roof and the floor is constructed by the heat-shielding panels 1, the interior of the prefabricated building 5 is not affected by outside air. Therefore, the prefabricated building 5 can be used as a storage warehouse.

As an embodiment of the applicable prefabricated building 5 of the present disclosure, preferably, the prefabricated building 5 is equipped with an air-conditioner. According to the prefabricated building 5, the indoor temperature can be set optionally by the air-conditioner.

### Example

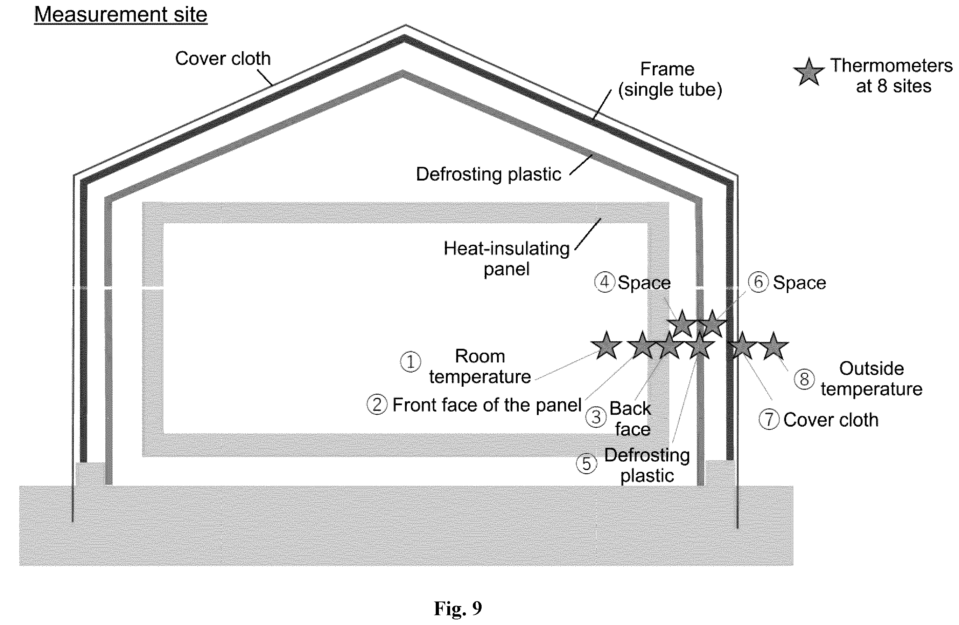

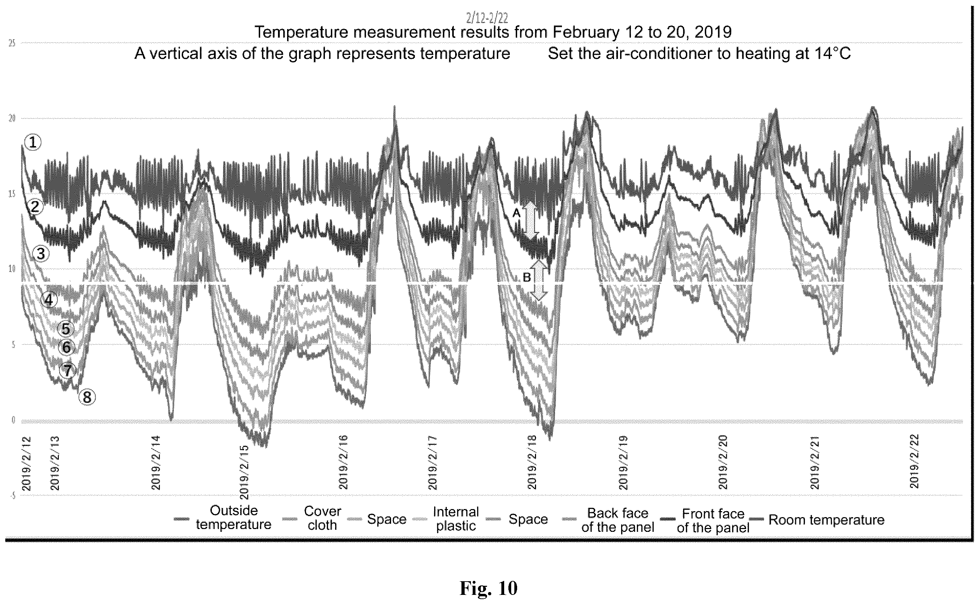

In cooperation with the Japan Aerospace Exploration Agency (JAXA), the temperature was measured at 8 sites under the conditions shown in Fig. 9. The heat-shielding panel used was a panel which is formed by sandwiching a spacer between two sheets which were formed by adhering an aluminum layer to one face of a paperboard and coating an shielding layer on the aluminum layer. The paperboard sides of the two sheets were adhered to the spacer of a cellular structure through an adhesive, and lines were formed on the two sheets under the pressing of end edges of the spacer. Air was enclosed in an enclosed space in the spacer. The thickness of the panel was about 15 mm, wherein the thickness of the spacer was about 14 mm. Bending or warping of the heat-shielding panel was not detected. The temperature measurement results from February 12 to 20, 2019 are shown in Fig. 10.

As shown in Fig. 10, particularly, the heat-shielding effects between temperature measurement sites 1 and 2 (between a room and a first heat-shielding sheet (arrow A)) and between temperature measurement sites 2 and 3 (between the first heat-shielding sheet and a second heat-shielding sheets (arrow B)) were particularly good. This was a remarkable effect not envisioned by a person skilled in the art. This effect was achieved by a simple structure formed by combining the first heat-shielding sheet, the second heat-shielding sheet and the spacer into a three-layer structure, and enclosing air in an enclosed space enclosed by the first heat-shielding sheet, the second heat-shielding sheet and the spacer, which was unexpected.

In addition, the temperature difference between the temperature measurement sites 2 and 3 was mainly borne by the enclosed space in the spacer. It can be considered that if only the heat-shielding performance is considered, it is not necessary that the second heat-shielding sheet has the same structure as the first heat-shielding sheet. However, by making the sheets on both faces of the spacer have the same structure, an effect of suppressing the bending or warping of the whole panel can be obtained.

### (List of the reference numerals in the drawings)

- 1: Heat-shielding panel
- 5: prefabricated building
- 10: one sheet
- 11: heat-shielding sheet
- 11a: sheet material
- 11b: metal layer
- 12: heat-shielding sheet
- 12a: shielding layer
- 12b: metal substrate
- 15: line
- 20: the other sheet
- 22: additional sheet
- 30: enclosed space
- 31: spacer
- 31d: end
- 31: additional enclosed space
- 40: adhesive

## Claims

1. A heat-shielding panel (1), comprising:
a three-layer structure composed of a first heat-shielding sheet (10), a second heat-shielding sheet (20), and a spacer (31);
the first heat-shielding sheet (10) being formed by adhering a metal layer (11b) to a sheet (11a) through an adhesive;
the second heat-shielding sheet (20) being formed by adhering the metal layer (11b) to the sheet (11a) through the adhesive;
the spacer (31) being arranged between the first heat-shielding sheet (10) and the second heat-shielding sheet (20);
outer surfaces of the first heat-shielding sheet (10) and the second heat-shielding sheet (20) being coated with a shielding layer (12a) respectively;
the first heat-shielding sheet (10) and the second heat-shielding sheet (20) being adhered to the spacer (31) through an adhesive (40);
lines being formed on the first heat-shielding sheet (10) and the second heat-shielding sheet (20) under the pressing of end edges of the spacer (31);
the sheet (11a) comprising a paperboard;
the metal layer (11b) comprising an aluminum layer;
the spacer (31) being made of paper, wood or plastic;
the spacer (31) comprising a space (30) enclosed by the first heat-shielding sheet (10), the second shielding sheet (20) and the spacer (31);
and
a fluid being enclosed in the enclosed space (30) in a manner that the fluid does not circulate in the enclosed space (30); wherein the fluid enclosed in the enclosed space is air.

2. The heat-shielding panel (1) of claim 1, wherein the length of one edge of the panel is at least about 900 mm.

3. The heat-shielding panel (1) of claim 1 or 2, wherein the thickness of the spacer (31) is about 4 mm to about 100 mm.

4. The heat-shielding panel (1) of any one of claims 1 to 3, wherein the aluminum layer (11b) is an aluminum foil.

5. The heat-shielding panel (1) of any one of claims 1 to 4, wherein the spacer (31) is made of paper.

6. The heat-shielding panel (1) of any one of claims 1 to 5, wherein the heat-shielding panel (1) is used to construct a prefabricated building (5) equipped with an air-conditioner (52).

7. A prefabricated building (5), comprising:
external walls, a roof, and a floor;
wherein at least one part of the external walls, the roof and the floor is constructed by the heat-shielding panels (1) of any one of claims 1 to 6.

8. The prefabricated building (5) of claim 7, wherein the prefabricated building is a storage warehouse equipped with an air-conditioner (52).

## Patentansprüche

1. Wärmeschutzplatte (1), umfassend:
eine dreischichtige Struktur, bestehend aus einer ersten Wärmeschutzfolie (10), einer zweiten Wärmeschutzfolie (20) und einem Distanzstück (31);
wobei die erste Wärmeschutzfolie (10) durch Anhaften einer Metallschicht (11b) auf eine Folie (11a) mittels eines Klebstoffs gebildet ist;
wobei die zweite Wärmeschutzfolie (20) durch Anhaften der Metallschicht (11b) auf die Folie (11a) mittels des Klebstoffs gebildet wird;
wobei das Distanzstück (31) zwischen der ersten Wärmeschutzfolie (10) und der zweiten Wärmeschutzfolie (20) angeordnet ist;
die Außenflächen der ersten Wärmeschutzfolie (10) und der zweiten Wärmeschutzfolie (20) jeweils mit einer Abschirmschicht (12a) beschichtet sind;
die erste Wärmeschutzfolie (10) und die zweite Wärmeschutzfolie (20) durch einen Klebstoff (40) an dem Distanzstück (31) befestigt sind;
auf der ersten Wärmeschutzfolie (10) und der zweiten Wärmeschutzfolie (20) unter dem Druck der Endkanten des Distanztstücks (31) Linien ausgebildet sind;
wobei die Folie (11a) eine Pappe umfasst;
wobei die Metallschicht (11b) eine Aluminiumschicht umfasst;
wobei das Distanzstück (31) aus Papier, Holz oder Kunststoff besteht;
wobei das Distanzstück (31) einen Raum (30) umfasst, der von der ersten Wärmeschutzfolie (10), der zweiten Wärmeschutzfolie (20) und dem Distanzstück (31) umschlossen ist; und
ein Fluid, das in dem umschlossenen Raum (30) so eingeschlossen ist, dass das Fluid nicht in dem umschlossenen Raum (30) zirkuliert; wobei das in dem umschlossenen Raum eingeschlossene Fluid Luft ist.

2. Wärmeschutzplatte (1) nach Anspruch 1, wobei die Länge einer Kante der Platte mindestens etwa 900 mm beträgt.

3. Wärmeschutzplatte (1) nach Anspruch 1 oder 2, wobei die Dicke des Distanzstücks (31) etwa 4 mm bis etwa 100 mm beträgt.

4. Wärmeschutzplatte (1) nach einem der Ansprüche 1 bis 3, wobei die Aluminiumschicht (11b) eine Aluminiumfolie ist.

5. Wärmeschutzplatte (1) nach einem der Ansprüche 1 bis 4, wobei das Distanzstück (31) aus Papier besteht.

6. Wärmeschutzplatte (1) nach einem der Ansprüche 1 bis 5, wobei die Wärmeschutzplatte (1) zum Bau eines Fertiggebäudes (5) verwendet wird, das mit einer Klimaanlage (52) ausgestattet ist.

7. Fertiggebäude (5), umfassend:
Außenwände, ein Dach und einen Boden;
wobei mindestens ein Teil der Außenwände, des Daches und des Bodens aus Wärmeschutzplatten (1) gemäß einem der Ansprüche 1 bis 6 besteht.

8. Das Fertiggebäude (5) nach Anspruch 7, wobei das Fertiggebäude ein Lagerhaus ist, das mit einer Klimaanlage (52) ausgestattet ist.

## Revendications

1. Panneau de protection thermique (1), comprenant :
une structure à trois couches composée d'une première feuille de protection thermique (10), d'une seconde feuille de protection thermique (20) et d'une entretoise (31) ;
la première feuille de protection thermique (10) étant formée en collant une couche de métal (11b) à une feuille (11a) à l'aide d'un adhésif ;
la seconde feuille de protection thermique (20) étant formée en collant la couche de métal (11b) à la feuille (11a) à travers l'adhésif ;
l'entretoise (31) étant agencée entre la première feuille de protection thermique (10) et la seconde feuille de protection thermique (20) ;
les surfaces extérieures de la première feuille de protection thermique (10) et de la seconde feuille de protection thermique (20) étant revêtues d'une couche de protection (12a) respectivement ;
la première feuille de protection thermique (10) et la seconde feuille de protection thermique (20) étant collées à l'entretoise (31) à l'aide d'un adhésif (40) ;
des lignes étant formées sur la première feuille de protection thermique (10) et la seconde feuille de protection thermique (20) sous la pression des bords d'extrémité de l'entretoise (31) ;
la feuille (11a) comprenant un carton ;
la couche de métal (11b) comprenant une couche d'aluminium ;
l'entretoise (31) étant en papier, en bois ou en plastique ;
l'entretoise (31) comprenant un espace (30) clos par la première feuille de protection thermique (10), la seconde feuille de protection (20) et l'entretoise (31) ;
et
un fluide étant enfermé dans l'espace clos (30) d'une manière telle que le fluide ne circule pas dans l'espace clos (30) ; dans lequel le fluide enfermé dans l'espace clos est de l'air.

2. Panneau de protection thermique (1) selon la revendication 1, dans lequel la longueur d'un bord du panneau est d'au moins environ 900 mm.

3. Panneau de protection thermique (1) selon la revendication 1 ou 2, dans lequel l'épaisseur de l'entretoise (31) est d'environ 4 mm à environ 100 mm.

4. Panneau de protection thermique (1) selon l'une quelconque des revendications 1 à 3, dans lequel la couche d'aluminium (11b) est un film d'aluminium.

5. Panneau de protection thermique (1) selon l'une quelconque des revendications 1 à 4, dans lequel l'entretoise (31) est réalisée en papier.

6. Panneau de protection thermique (1) selon l'une quelconque des revendications 1 à 5, dans lequel le panneau de protection thermique (1) est utilisé pour construire un bâtiment préfabriqué (5) équipé d'un climatiseur (52).

7. Bâtiment préfabriqué (5), comprenant :
des murs extérieurs, un toit et un plancher ;
dans lequel au moins une partie des murs extérieurs, du toit et du plancher est construite par les panneaux de protection thermique (1) selon l'une quelconque des revendications 1 à 6.

8. Bâtiment préfabriqué (5) selon la revendication 7, dans lequel le bâtiment préfabriqué est un entrepôt de stockage équipé d'un climatiseur (52).
